# EUROPEAN PATENT SPECIFICATION

(11) **EP 3 388 215 B1**
(45) Date of publication and mention of the grant of the patent: **07.10.2020**
(21) Application number: 16872927.5
(22) Date of filing: 05.12.2016
(51) Int. Cl.: B29B 15/12, B32B 3/12, B32B 5/02, C08J 5/24, B29K 61/04, B29K 63/00, B29K 105/08, B29D 24/00, B29C 70/08, D06C 11/00

(54) **SANDWICH PANEL, METHOD FOR PRODUCING UNIDIRECTIONAL PREPREG, AND METHOD FOR PRODUCING SANDWICH PANEL**
SANDWICHPLATTE, VERFAHREN ZUR HERSTELLUNG EINES UNIDIREKTIONALEN PREPREG UND VERFAHREN ZUR HERSTELLUNG DER SANDWICHPLATTE
PANNEAU SANDWICH, PROCÉDÉ DE PRODUCTION DE PRÉIMPRÉGNÉ UNIDIRECTIONNEL, ET PROCÉDÉ DE PRODUCTION DE PANNEAU SANDWICH

(30) Priority: 10.12.2015 JP 2015241427
(43) Date of publication of application: 17.10.2018
(73) Proprietor: Arisawa Mfg. Co., Ltd., Joetsu-shi, Niigata 943-8610 (JP)
(72) Inventor: HIRAI Masaaki, Joetsu-shi Niigata 943-8610 (JP); WATABE Kenichi, Joetsu-shi Niigata 943-8610 (JP); HORIE Takahiro, Joetsu-shi Niigata 943-8610 (JP); TANAKA Hiroshi, Joetsu-shi Niigata 943-8610 (JP)
(74) Representative: Hoffmann Eitle
(86) International application number: PCT/JP2016/086011
(87) International publication number: WO 2017/099029

(56) References cited:
- EP-A2- 0 873 860
- WO-A1-2013/077087
- WO-A1-2014/195884
- JP-A- S5 117 984
- JP-A- H10 337 785
- JP-A- H10 338 758
- JP-A- 2009 256 833
- JP-A- 2010 189 561
- JP-A- 2013 181 112
- JP-A- 2014 139 356
- JUN HIRAI et al.: "Sokan no Keba ga Fukugo Zairyo no Rikigakuteki Tokusei ni Oyobosu Eikyo", The Textile Machinery Society of Japan, vol. 63, May 2010 (2010-05), pages 44-45, XP008173800,
- JUN HIRAI et al.: "Ihosei o Yusuru Sokan no Keba ga Fukugo Zairyo no Rikigakuteki Tokusei ni Oyobosu Eikyo", The Textile Machinery Society of Japan, vol. 65, 2 June 2012 (2012-06-02), pages 122-123,

## Description

### TECHNICAL FIELD

The present invention relates to a sandwich panel, a method for manufacturing a unidirectional prepreg, and a method for manufacturing a sandwich panel.

### BACKGROUND ART

Honeycomb sandwich panels in which a fiber-reinforced-resin skin layer is layered on the upper and lower surfaces of a honeycomb core are lightweight and rigid and are widely used as interior materials in aircraft, automobiles, etc.

As disclosed in, e.g., Patent Document 1, a skin layer is configured such that a unidirectional-fiber-reinforced resin body that comprises a matrix resin and a unidirectional fiber body in which fiber bundles are aligned in one direction, and a woven-fiber-reinforced resin body that comprises a matrix resin and an interwoven fiber body in which fiber bundles are interwoven as warp bundles and weft bundles, are layered, the unidirectional fiber body of the skin layer being configured from carbon fiber bundles, whereby the weight of the honeycomb panel can be reduced.

However, carbon fiber is expensive (approximately ten times the price of glass fiber), and there is a demand for cheaper configurations.

In addition, although carbon fiber is highly rigid, it has properties whereby, when the fiber fractures, it fractures all at once near the fracture point, which is undesirable. Specifically, in aircraft and/or automobiles in which people are riding, the fiber preferably is of such tenacity as to fracture gradually near the fracture point rather than fracturing all at once.

Furthermore, in cases where a unidirectional-fiber-reinforced resin body comprising carbon fiber bundles is used in a skin layer, during bolt hole processing or other types of machine processing that are necessary when multiple honeycomb panels are to be joined together or when a door release or other attachment member is to be attached to a honeycomb panel, a disadvantage is presented in that tiny cracks readily form in a direction parallel to the fibers of the unidirectional-fiber-reinforced resin body.

### [Prior-Art Documents]

### [Patent Documents]

[Patent Document 1] Japanese Patent No. 4278678
**[Patent document 2]** Document EP 0 873 860 discloses a prepreg based on a glass cloth impregnated with a thermoset resin, said cloth being treated by nap-raising.

### DISCLOSURE OF THE INVENTION

### PROBLEM TO BE SOLVED BY THE INVENTION

The present invention was contrived in view of the conditions described above, and provides: an innovative sandwich panel which
not only is lightweight but also can be produced inexpensively, which
moreover has a fracture mode in which the sandwich panel fractures
gradually near the fracture point rather than fracturing all at once,
and furthermore in which it is possible to mitigate cracking that
occurs in the direction of fibers in a unidirectional fiber body during
machine processing; a method for manufacturing a unidirectional
prepreg; and a method for manufacturing a sandwich panel.

### MEANS FOR SOLVING THE PROBLEM

The main points of the present invention are described below with
reference to the attached drawings.

The present invention relates to a sandwich panel in which a skin layer 2 is provided to upper and lower surfaces of a core 1, wherein the sandwich panel is characterized in that: the skin layer 2 is obtained by layering unidirectional-fiber-reinforced resin bodies 3, 4 that comprise a matrix resin and a unidirectional fiber body in which carbon fiber bundles A and glass fiber bundles B are aligned in one direction, and woven-fiber-reinforced resin bodies 5, 6 that comprise a matrix resin and an interwoven fiber body in which glass fiber bundles are interwoven as warp bundles and weft bundles; and commingled parts C in which the nap of the carbon fiber bundles A and that of the glass fiber bundles B commingle, or unitary parts where only the nap of the carbon fiber bundles A is present, are provided along the length direction of each fiber bundle between adjacent carbon fiber bundles A and glass fiber bundles B in the unidirectional-fiber-reinforced resin bodies 3, 4.

The present invention also relates to the sandwich panel according to the first aspect, wherein the sandwich panel is characterized in that the length of the nap provided to the carbon fiber bundles A and to the glass fiber bundles B in the unidirectional-fiber-reinforced resin bodies 3, 4 is set to 1-5 mm.

The present invention also relates to the sandwich panel according to the first aspect, wherein the sandwich panel is characterized in that the unidirectional fiber body is configured such that the carbon fiber bundles A and the glass fiber bundles B are alternatingly provided in alignment with each other.

The present invention also relates to the sandwich panel according to the first aspect, wherein the sandwich panel is characterized in that: the skin layer 2 is configured such that a first woven-fiber-reinforced resin body 5, a first unidirectional-fiber-reinforced resin body 3 in which the fiber bundles are arrayed in a prescribed direction, a second woven-fiber-reinforced resin body 6, and a second unidirectional-fiber-reinforced resin body 4 in which the fiber bundles are arrayed in a direction orthogonal to that of the fiber bundles in the first unidirectional-fiber-reinforced resin body 3 are layered in the stated order from the core 1 side; and the resin content of the fiber-reinforced resin bodies is set to at least 60% by weight in the first woven-fiber-reinforced resin body 5, at least 55% by weight in the second woven-fiber-reinforced resin body 6, and no more than 29% by weight in each of the first unidirectional-fiber-reinforced resin body 3 and the second unidirectional-fiber-reinforced resin body 4.

The present invention also relates to the sandwich panel according to the fourth aspect, wherein the sandwich panel is characterized in that a black woven-fiber-reinforced resin body 7 that comprises a matrix resin and an interwoven fiber body in which glass fiber bundles are interwoven as warp bundles and weft bundles, has a resin content of at least 30% by weight, and contains at least 1% by weight of a black pigment in the matrix resin is provided to the outer side of the second unidirectional-fiber-reinforced resin body 4 of the skin layer 2.

The present invention also relates to the sandwich panel according to the first aspect, wherein the sandwich panel is characterized in that: the matrix resin used in the skin layer 2 comprises a phenol resin or a mixture of a phenol resin and an epoxy resin; and the phenol resin is such that, in a heat release test, the peak value of the heat quantity at 5 minutes is 30 kW/m² or less, and the integral value of the heat quantity at 2 minutes is 25 kW/m² or less.

The present invention also relates to the sandwich panel according to the first aspect, wherein the sandwich panel is characterized in that the core 1 is a honeycomb core 1.

The present invention also relates to a method for manufacturing a unidirectional prepreg that comprises a matrix resin and a unidirectional fiber body in which carbon fiber bundles A and glass fiber bundles B are aligned in one direction, wherein the method for manufacturing a unidirectional prepreg is characterized in that: the side parts of both the carbon fiber bundles A and the glass fiber bundles B, or of only the carbon fiber bundles A, are subjected to a nap-raising process; and the carbon fiber bundles A and the glass fiber bundles B are then aligned in one direction, heated, and semi-cured.

The present invention also relates to the method for manufacturing a unidirectional prepreg according to the eighth aspect, wherein the method for manufacturing a unidirectional prepreg is characterized in that each of the carbon fiber bundles A and the glass fiber bundles B is continuously conveyed in a state of being alternatingly wound in a meandering manner about a plurality of contact bodies 13, and the nap-raising process is continuously carried out on both side parts of each of the carbon fiber bundles A and the glass fiber bundles B by the friction between the carbon fiber bundles A and glass fiber bundles B and the contact bodies 13.

The present invention also relates to a method for manufacturing a sandwich panel, said method being characterized in that the unidirectional-fiber-reinforced resin bodies in the sandwich panel according to the first aspect are formed by curing unidirectional prepregs manufactured using the method for manufacturing a unidirectional prepreg according to the eighth aspect.

### EFFECT OF THE INVENTION

Because the present invention is configured in the manner described above, there are provided: an innovative sandwich panel which not only is lightweight but also can be produced inexpensively, which moreover has a fracture mode in which the sandwich panel fractures gradually near the fracture point rather than fracturing all at once, and furthermore in which it is possible to mitigate cracking that occurs in the direction of fibers in a unidirectional fiber body during machine processing; a method for manufacturing a unidirectional prepreg; and a method for manufacturing a sandwich panel.

### BRIEF DESCRIPTION OF THE DRAWINGS

FIG. 1 is a schematic perspective view of the present embodiment in which a portion is cut away;
FIG. 2 is an exploded perspective view of the present embodiment;
FIG. 3 is a schematic drawing of commingled parts in the present embodiment;
FIG. 4 is a schematic view of an apparatus for manufacturing a unidirectional prepreg;
FIG. 5 is an enlarged schematic plan view of portion X in FIG. 4;
FIG. 6 is a schematic perspective view of a nap-opening member;
FIG. 7 is a schematic perspective view of a nap-opening plate-shaped member;
FIG. 8 is a schematic view of cracking that occurs during hole processing; and
FIG. 9 is a graph showing the results of a four-point bending test.

### BEST MODE FOR CARRYING OUT THE INVENTION

Preferred embodiments of the present invention are briefly described below with reference to the diagrams while indicating the operation of the present invention.

A configuration is adopted that is commensurately inexpensive in comparison with a configuration in which a unidirectional-fiber-reinforced resin body of a skin layer 2 is configured from only carbon fiber bundles A.

The unidirectional-fiber-reinforced resin bodies of the present invention are configured not only from carbon fiber bundles A, but also from glass fiber bundles B that commingle therewith, the glass fiber bundles B being less susceptible to cracking, and commingled parts C in which the nap of the carbon fiber bundles A and that of the glass fiber bundles B commingle, or unitary parts where only the nap of the carbon fiber bundles A is present, are present between the carbon fiber bundles A and the glass fiber bundles B of the unidirectional-fiber-reinforced resin bodies 3, 4, therefore resulting in excellent adhesion between the carbon fiber bundles A and the glass fiber bundles B during molding into a prepreg. Furthermore, a molded and cured sandwich panel is less susceptible to cracking along the fiber even when subjected to shock from machine processing, etc.

In the unidirectional-fiber-reinforced resin bodies 3, 4, because commingled parts C in which the nap of the two types of fiber bundles commingle, or unitary parts where only the nap of the carbon fiber bundles A is present, are present between the carbon fiber bundles A and the glass fiber bundles B, the carbon fiber bundles A and the glass fiber bundles B of the unidirectional fiber bodies strongly adhere in the width direction, and features of the glass fiber are ideally reflected, which results in a fracture mode in which the unidirectional-fiber-reinforced resin bodies 3, 4 fracture gradually near the fracture point.

Moreover, width-direction adhesion between the carbon fiber bundles A and the glass fiber bundles B is improved by the commingled parts C or the unitary parts, thereby making it possible to reduce the resin content of the unidirectional-fiber-reinforced resin bodies. Specifically, although it is common to increase the resin content in order to minimize cracking that occurs along the direction of fiber bundles in a unidirectional fiber body during machine processing of a sandwich panel, using a unidirectional fiber body having the above mentioned coming led parts C or unitary parts makes it possible to improve adhesion without increasing the resin content. Specifically, because the nap of the carbon fiber bundles A and that of the glass fiber bundles B, or the nap of only the carbon fiber bundles A, is present in the commingled parts C or the unitary parts, respectively, it is possible to reduce the resin content to a greater extent than when no nap is present. As a result, it is possible to reduce the amount of matrix resin that is necessary in order to sufficiently bond the carbon fiber bundles A and the glass fiber bundles B, therefore making it possible to reduce the resin content of the unidirectional-fiber-reinforced resin bodies, and also making it possible, even when some of the carbon fiber bundles A in the unidirectional fiber body are replaced with glass fiber bundles B, to set the weight equal to that in a case where all of the fibers in the unidirectional fiber body are carbon fiber bundles A.

### [Embodiments]

Specific embodiments of the present invention are described below with reference to the diagrams.

The present embodiment is a sandwich panel in which a skin layer 2 is provided on upper and lower surfaces of a core 1, wherein: the skin layer 2 is obtained by layering unidirectional-fiber-reinforced resin bodies that comprise a matrix resin and a unidirectional fiber body in which carbon fiber bundles A and glass fiber bundles B are aligned in one direction, and woven-fiber-reinforced resin bodies that comprise a matrix resin and an interwoven fiber body in which glass fiber bundles are interwoven as warp bundles and weft bundles; and commingled parts C in which the nap of the carbon fiber bundles A and that of the glass fiber bundles B commingle are provided along the length direction of each fiber bundle between adjacent carbon fiber bundles A and glass fiber bundles B in the unidirectional fiber bodies.

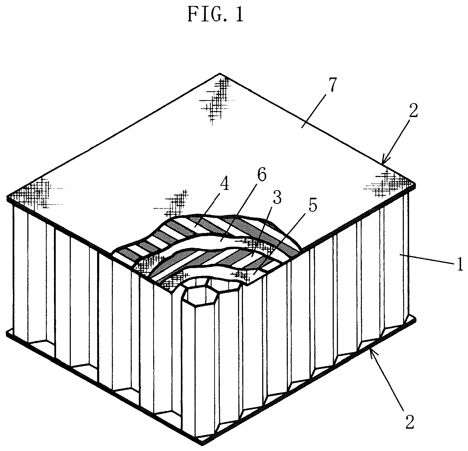

Specifically, the present embodiment is a honeycomb sandwich panel in which a honeycomb core 1 is sandwiched by fiber-reinforced-resin skin layers 2, as shown in FIG. 1. A member comprising various materials such as aramid fibers, cellulose fibers, or aluminum can be employed as the honeycomb core 1 in accordance with the application. A core member other than a honeycomb core 1 having a hexagonal cross-section, such as a core member having a square cross-section or a wave-shaped core member, may be employed as the core 1.

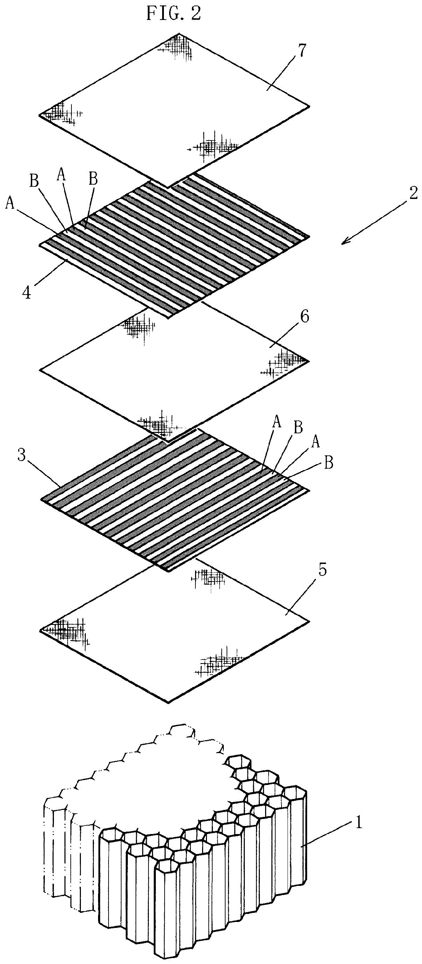

As shown in FIG. 1 and 2, the skin layer 2 of the present embodiment is configured such that a first woven-fiber-reinforced resin body 5, a first unidirectional-fiber-reinforced resin body 3 in which the fiber bundles are arrayed parallel (0°) to one (length-direction) side of the sandwich panel, a second woven-fiber-reinforced resin body 6, and a second unidirectional-fiber-reinforced resin body 4 in which the fiber bundles are arrayed parallel (90°) to another (width-direction) side of the sandwich panel orthogonal to the one side are layered in the stated order from the core 1 side. Provided that the unidirectional-fiber-reinforced resin bodies 3, 4 are in a relationship such that the fiber bundles therein are orthogonal to each other, the present invention is not particularly limited to the configuration in which the fiber bundles are arrayed along the length direction and width direction of the sandwich panel; other configurations may be employed.

In cases where the woven-fiber-reinforced resin bodies 5, 6 are layered such that the warp bundles and weft bundles are arrayed at +45° and -45° so as to be disposed at an incline with respect to the fiber bundles of the unidirectional-fiber-reinforced resin bodies 3, 4, in-plane shear (IPS) can be increased to a greater extent than when the woven-fiber-reinforced resin bodies 5, 6 are layered such that the warp and weft bundles are arrayed parallel (0° and 90°) to the one (length-direction) side and the other (width-direction) side of the sandwich panel in the same manner as the fiber bundles of the unidirectional-fiber-reinforced resin bodies 3, 4. Specifically, the IPS measured in conformance with an IPS test (BMS4-17) used by The Boeing Company is 25 kN when the warp bundles and weft bundles of the woven-fiber-reinforced resin bodies 5, 6 are arrayed at 0° and 90°, and is 32 kN when said warp bundles and weft bundles are arrayed at +45° and -45°.

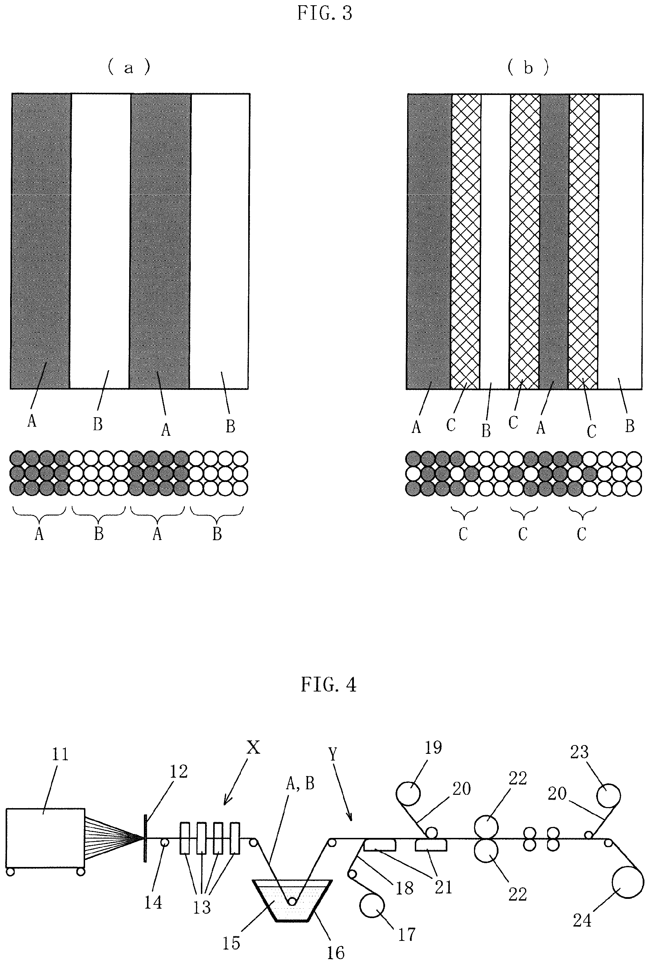

As shown in FIG. 3, commingled parts C in which the nap of the carbon fiber bundles A and that of the glass fiber bundles B commingle are provided along the entirety of the length direction of each fiber bundle between carbon fiber bundles A and glass fiber bundles B in the unidirectional-fiber-reinforced resin bodies. In the present embodiment, the carbon fiber bundles A and the glass fiber bundles B are alternatingly provided in alignment with each other.

FIG. 3(a) is a schematic drawing (schematic plan view and schematic cross-sectional view) of a unidirectional-fiber-reinforced resin body in which no commingled parts are present (in which the nap of the fibers has not been raised), and FIG. 3(b) is a schematic drawing (schematic plan view and schematic cross-sectional view) of a unidirectional-fiber-reinforced resin body in the present embodiment. The size of the commingled parts C is exaggerated for ease of understanding.

The commingled parts C are configured such that the nap of side parts of adjacent carbon fiber bundles A and glass fiber bundles B are bonded together by the matrix resin. The length of the nap is set to 1-5 mm. A length of less than 1 mm results in insufficient inter-nap adhesion; conversely, a length of over 5 mm could result in insufficient strength of the fiber bundles. The length of the nap is preferably set to 4-5 mm so that the inter-nap adhesion between adjacent fiber bundles is as excellent as possible. The width of each of the fiber bundles is approximately 5-10 mm.

The resin content of the fiber-reinforced resin bodies is set to at least 57% by weight (60±3 in control values for the resin content) in the first woven-fiber-reinforced resin body 5, at least 52% by weight (55±3 in control values for the resin content) in the second woven-fiber-reinforced resin body 6, and no more than 32% by weight (29±3 in control values for the resin content) in each of the first unidirectional-fiber-reinforced resin body 3 and the second unidirectional-fiber-reinforced resin body 4. It is possible to produce the sandwich panel without regard for the resin content, but this could make it impossible to integrate the fiber-reinforced resin bodies and could increase the weight, and also makes it impossible, after curing, to impart lightness and strength equal to those of a sandwich panel in which the unidirectional-fiber-reinforced resin bodies 3, 4 entirely comprise carbon fiber. Thus, the inventors have determined control values for the resin content in manufacturing and established conditions for manufacturing an ideal sandwich panel.

A black woven-fiber-reinforced resin body 7 that comprises a matrix resin and an interwoven fiber body in which glass fiber bundles are interwoven as warp bundles and weft bundles, has a resin content of at least 30% by weight, and contains at least 1% by weight of a black pigment in the matrix resin is provided to the outer side of the second unidirectional-fiber-reinforced resin body 4 of the skin layer 2. In this case, a black pigment is compounded in the matrix resin so that the weave is black, but the glass fiber also may be colored, or a black-dyed weave may be used.

The second unidirectional-fiber-reinforced resin body 4 is configured such that the carbon fiber bundles A and the glass fiber bundles B are alternatingly provided in alignment with each other, and the carbon fiber bundles A and the glass fiber bundles B are of different colors; therefore, a black (carbon fiber bundles A) and brown (glass fiber bundles B) striped pattern is formed. Therefore, when a surface material (polyvinylidene fluoride film, etc.) for an interior material is provided on the second unidirectional-fiber-reinforced resin body 4, there are cases when the striped pattern is visible through the surface material, adversely affecting the appearance.

With respect to this point, in the present embodiment, by providing the black woven-fiber-reinforced resin body 7, which is colored black, to the outer side of the second unidirectional-fiber-reinforced resin body 4, it is possible to conceal the surface of the second unidirectional-fiber-reinforced resin body 4, yielding a configuration in which the striped pattern is not visible when a surface material is provided. In cases where the unidirectional-fiber-reinforced resin body 3 is colored black, a further increase in the concealment effect can be confirmed. Layering the black woven-fiber-reinforced resin body 7 on the second unidirectional-fiber-reinforced resin body 4 also yields a configuration in which the unidirectional-fiber-reinforced resin body is pressed from above by the woven-fiber-reinforced resin body, making it possible to better prevent the occurrence of cracking in the unidirectional-fiber-reinforced resin body during hole processing or other types of machine processing.

A phenol resin or a mixture of a phenol resin and an epoxy resin can be employed as the matrix resin used in the skin layer 2. In consideration of non-combustibility, it is preferable to employ a phenol resin having properties such that, in a heat release test, the peak value of the heat quantity at 5 minutes is 30 kW/m² or less, and the integral value of the heat quantity at 2 minutes is 25 kW/m² or less.

The skin layer 2 is formed by layering sheet-shaped prepregs that form each of the fiber-reinforced resin bodies, and then curing the layered prepregs.

In the present embodiment, when unidirectional prepregs that form the unidirectional-fiber-reinforced resin bodies 3, 4 are manufactured by curing, a nap-raising process is carried out on the side parts of the carbon fiber bundles A and the glass fiber bundles B to raise the nap, whereby commingled parts C in which the nap (fibers) of the two types of fiber bundles commingle are formed between adjacent fiber bundles. The woven-fiber-reinforced resin bodies can be obtained by manufacturing a woven prepreg by a well-known method and curing the woven prepreg.

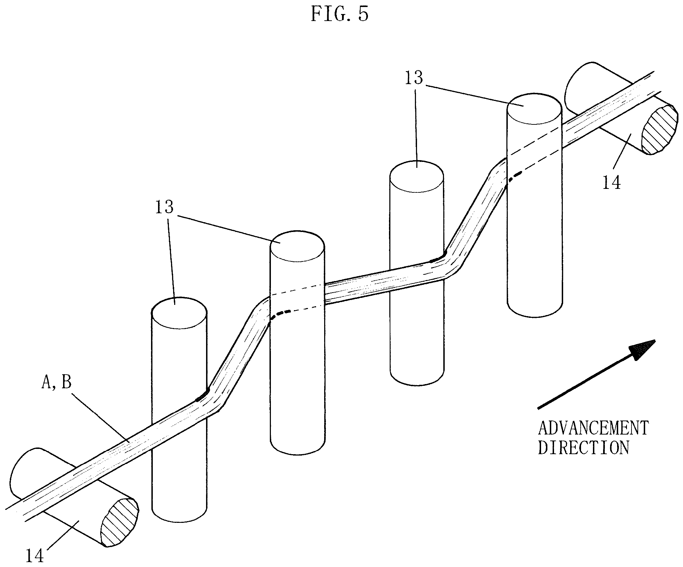

The carbon fiber bundles A and the glass fiber bundles B are obtained by causing a plurality of carbon fiber filaments or glass fiber filaments to converge using a convergence agent, and the nap is formed by using mechanisms such as are shown in FIG. 4 and 5 to slightly cut the filaments on the two side surfaces of the fiber bundles. These mechanisms are described later. In the present embodiment, 800-tex fiber bundles (e.g., T700SC with 12,000 filaments, made by Toray Industries) are employed as the carbon fiber bundles A, and 1,200-tex fiber bundles (e.g., treated product 318 made by JUSHI Fiber) are employed as the glass fiber bundles B.

The unidirectional prepregs that form the unidirectional-fiber-reinforced resin bodies 3, 4 in the present embodiment can be manufactured using a unidirectional prepreg manufacturing device such as is shown in, e.g., FIG. 4.

Specifically, a plurality of bobbins on which the carbon fiber bundles A and the glass fiber bundles B are wound are installed in a creel 11, the fiber bundles A, B drawn out from the bobbins are subjected to a nap-raising process along the width direction of the fiber bundles of the unidirectional fiber bodies and also to a resin impregnation process in a state in which the fiber bundles A, B are gathered in a prescribed row by a reed 12, and then the fiber bundles A, B are subjected to a heating process in the aligned state. Either of the nap-raising process and the resin impregnation process may be performed first, but performing the nap-raising process before the resin impregnation process facilitates raising of the nap.

The nap-raising process is performed by bringing the fiber bundles A, B into contact with contact bodies 13. The contact bodies 13 are cylindrical bodies fixed so as to be incapable of rotating and are configured such that the side parts of the fiber bundles A, B are suitably subjected to nap-raising upon contact with the rough peripheral surfaces of the contact bodies 13. As shown in FIG. 5, four contact bodies 13 are disposed in a zigzag so as to catch the fiber bundles A, B therebetween, and each of the fiber bundles A, B is wound in an alternating manner so as to meander between the plurality of contact bodies 13 and is continuously conveyed in a state in which the side parts of the fiber bundles A, B are in alternating contact with the contact bodies 13. In the drawings, 14 indicates a support roll.

The carbon fiber bundles A and the glass fiber bundles B are thereby subjected to the nap-raising process, in which the nap is continuously raised on both side parts thereof by the friction between the carbon fiber bundles A and glass fiber bundles B and the contact bodies 13. In the present embodiment, the fiber bundles A, B come into contact with four contact bodies 13, but a configuration may be adopted in which the fiber bundles A, B come into contact with three or fewer contact bodies 13, or with five or more contact bodies 13. In addition, in the present embodiment, the contact bodies 13 are disposed in a vertical direction (90°) orthogonal to the conveying direction as a preferred state, but a configuration may be adopted in which the contact bodies 13 are disposed in a horizontal direction (0°) orthogonal to the conveying direction. Furthermore, the contact bodies 13 may be disposed at an incline of 5-10° relative to the horizontal direction (0°) and orthogonal to the conveying direction. Disposing the contact bodies 13 at a slight incline rather than along the horizontal direction and causing contact with the fiber bundles makes it possible to generate the nap at only the end parts of the fiber bundles rather than along the entire width direction thereof.

The length of the nap produced by the nap-raising process can be appropriately set by adjusting the contact angle of the contact bodies 13 and other such parameters. For example, adjusting the back tension of the fiber bundles with respect to the creel 11, the dispositional relationship with respect to the contact bodies 13 (the meandering curvature of the fiber bundles as caused by the contact bodies 13), the surface roughness of the contact bodies 13, etc., makes it possible to appropriately set the length.

In the same manner as a typical prepreg, the fiber bundles A, B that have been subjected to the nap-raising process are impregnated with resin in a resin tank 16 in which a matrix resin 15 is stored, and are heated and semi-cured by a heater 21 in a state in which a separator 18 is superposed on the lower surface of the fiber bundles A, B and a release film 20 is superposed on the upper surface of the fiber bundles A, B, after which the fiber bundles A, B are laminated by laminate rolls 22, the release film 20 is wound on a separate release film winding roll 23, and the unidirectional prepreg is wound on a winding roll 24 together with the separator 18. In the drawings, 17 indicates a separator feed roll, and 19 indicates a release film feed roll.

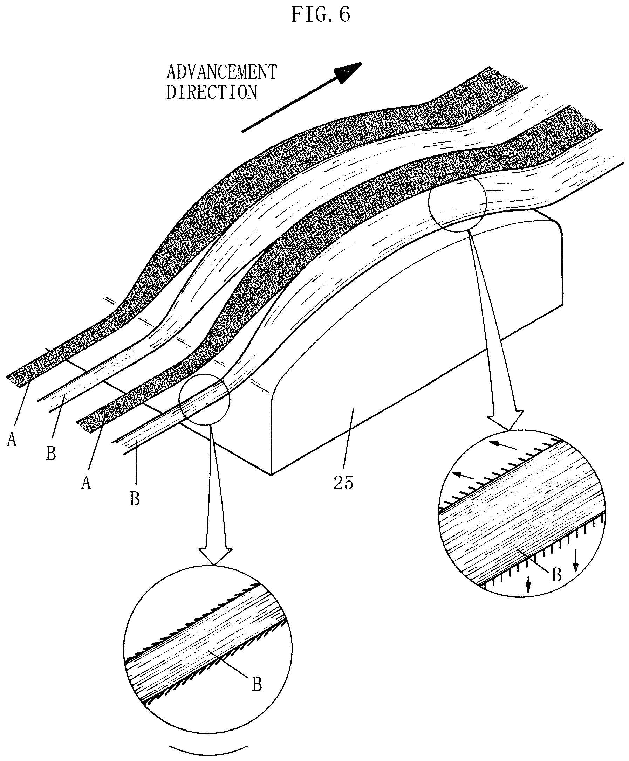

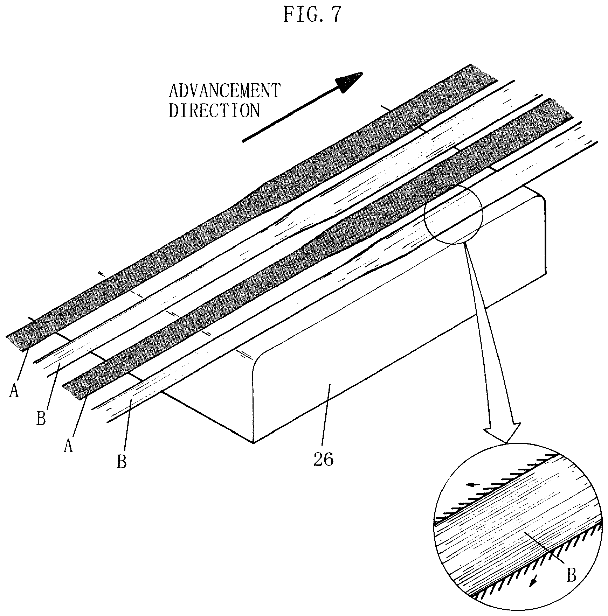

In cases where the nap is integrated with the fiber bundles A, B due to the matrix resin and does not spread, a "semicylindrical" nap-opening member 25 in which the upper surface has a cylindrical surface shape, as shown in FIG. 6, is provided at a position following the resin impregnation and preceding heating by the heater 21 (i.e., at position Y in FIG. 4). A fixed opening effect can also be obtained using a plate-shaped member 26 in which the upper surface has a flat surface shape, as shown in FIG. 7, but the semicylindrical shape shown in FIG. 6 enables more effective opening of the nap (the nap can be arranged toward the sides of the fiber bundles). Conveying the fiber bundles A, B along the upper surface of the nap-opening member 25 to open the nap enables the fiber bundles A, B to be pressed against the cylindrical surface and opening, thus also opening the nap (arrows in the enlarged portion in FIG. 6) and making it possible to arrange the nap toward the sides of the fiber bundles. The opening of the nap is also accelerated by resin flowing out from the opened fiber bundles A, B. Forcibly opening the nap causes the nap of adjacent fiber bundles A, B to reliably be in close proximity and adhere due to the matrix resin, and enables excellent formation of the commingled parts C.

The unidirectional prepregs formed in the manner described above and the woven prepregs are layered in a prescribed sequence on the upper and lower surfaces of a honeycomb core 11, cured, and integrated, thereby making it possible to manufacture a sandwich panel configured in the manner described above.

In the present embodiment, there is a description of a configuration in which there are provided commingled parts C in which the nap of the carbon fiber bundles A and that of the glass fiber bundles B commingle; however, a configuration may be adopted in which, instead of commingled parts C, there are provided unitary parts obtained by carrying out the nap-raising process on only the carbon fiber bundles A and not the glass fiber bundles B, the unitary parts being configured from the nap of the carbon fiber bundles A and the matrix resin. In this case, the configuration is slightly inferior to the configuration in which the commingled parts C are provided, but it is possible to obtain an effect similar to that in the present embodiment.

Because the present embodiment is configured in the manner described above, the present embodiment is commensurately inexpensive in comparison with a configuration in which a unidirectional-fiber-reinforced resin body of a skin layer 2 is configured from only carbon fiber bundles A.

In addition, because the unidirectional-fiber-reinforced resin bodies are configured not only from carbon fiber bundles A, but also from glass fiber bundles B that commingle therewith, the glass fiber bundles B being less susceptible to cracking, and commingled parts C in which the nap of the two types of fiber bundles commingle are present between the carbon fiber bundles A and the glass fiber bundles B of the unidirectional-fiber-reinforced resin bodies 3, 4, adhesion between the carbon fiber bundles A and the glass fiber bundles B is excellent, and a configuration is achieved that is less susceptible to cracking along the fibers even when subjected to shock from machine processing, etc.

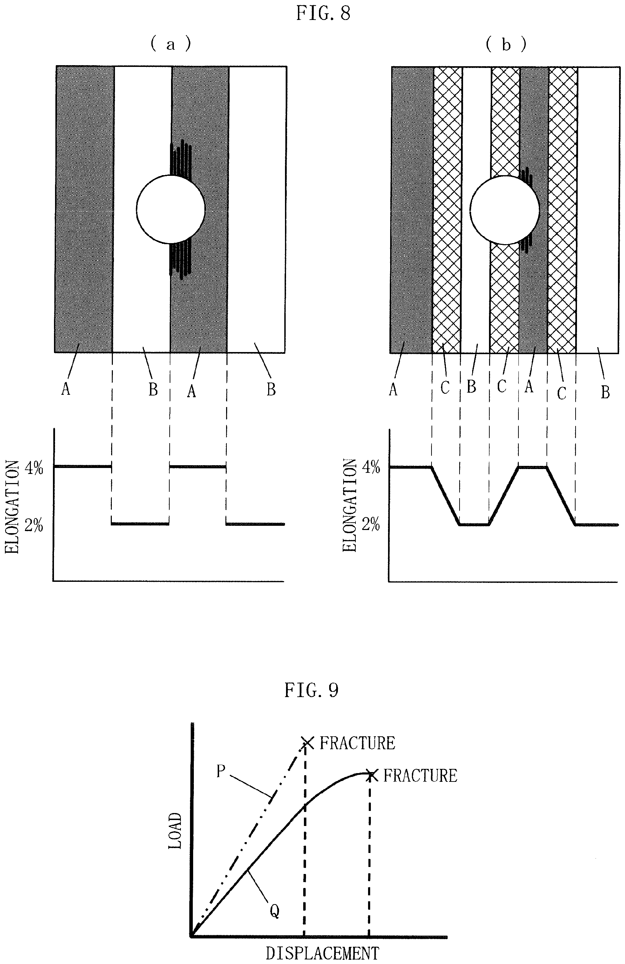

Specifically, carbon fiber has a high elastic modulus (e.g., 230 GPa), but does not readily elongate (e.g., fiber elongation of 2%). Conversely, glass fiber has a low elastic modulus (e.g., 70 GPa), but readily elongates (e.g., fiber elongation of 4%). Therefore, a unidirectional-fiber-reinforced resin body comprising carbon fiber is susceptible to the formation of tiny cracks during machine processing, and conversely, a unidirectional-fiber-reinforced resin body comprising glass fiber has such properties as to be less susceptible to the formation of tiny cracks. However, if carbon fiber bundles in the unidirectional-fiber-reinforced resin body are simply replaced with glass fiber bundles that are less susceptible to the formation of tiny cracks, the unidirectional-fiber-reinforced resin body will still be susceptible to cracking at the interface of the two types of fiber bundles due to the difference in elongation therebetween (FIG. 8(a)).

In the present embodiment, the nap is forcibly raised on the carbon fiber bundles and the glass fiber bundles, and the nap of different adjacent fiber bundles adhere together, thereby strongly joining the interface between the fiber bundles; therefore, to a greater extent than in a case where a unidirectional-fiber-reinforced resin body is configured from only carbon fiber bundles, a configuration is achieved in which not only is a portion replaced with glass fiber bundles that are less susceptible to cracking, but also it is possible to set the elongation of the commingled parts C to an intermediate level between the elongation of the carbon fiber and that of the glass fiber and to prevent cracking at the interface of the different types of fiber bundles to an excellent degree. Thus, a configuration is achieved which is less susceptible to cracking along the fibers (FIG. 8(b)).

Furthermore, in the unidirectional-fiber-reinforced resin bodies 3, 4, the carbon fiber bundles A and the glass fiber bundles B strongly adhere, whereby features of the glass fiber are ideally reflected, which results in a fracture mode in which the unidirectional-fiber-reinforced resin bodies 3, 4 fracture gradually near the fracture point.

Specifically, with respect to a unidirectional-fiber-reinforced resin body formed by aligning carbon fiber bundles in one direction and/or a unidirectional-fiber-reinforced resin body P in which carbon fiber bundles A and glass fiber bundles B simply are alternatingly provided in alignment with each other without any commingled parts present, when a four-point bending test such as that indicated by bending test standard MIL-STD-401B is carried out and a graph is created with the amount of displacement on the horizontal axis and the bending load on the vertical axis, as shown in FIG. 9, a fracture line in a triangular shape is obtained near the fracture point. Specifically, P shows brittle fracture in a "linear area" in which fracture occurs all at once at the fracture point.

Conversely, when the same graph is created with respect to a unidirectional-fiber-reinforced resin body Q formed by aligning carbon fiber bundles and glass fiber bundles in one direction according to the present embodiment, a fracture line in the shape of a shark dorsal fin is obtained near the fracture point. Specifically, Q shows ductile fracture in a "non-linear area" in which fracture occurs gradually near the fracture point rather than all at once at the fracture point. Near the fracture point for Q, although the honeycomb panel is subjected to stress due to the load applied thereto, the stress is released while being countervailed (i.e., although the test device applies stress, that stress is not transmitted to the honeycomb panel that is the test piece), thereby preventing the progression of fracture due to external stress. In this test, because deformation gradually increases while stress is applied to the honeycomb panel, fracture will eventually occur. The behavior of the honeycomb panel near the fracture point is to prevent the progression of fracture while releasing external stress; i.e., the honeycomb panel shows high "fracture toughness." For an aircraft or automobile carrying passengers or cargo, having high fracture toughness is advantageous because the aircraft or automobile will have tenacity near the fracture point and will not fracture all at once due to any shock.

Adhesion between the carbon fiber bundles A and the glass fiber bundles B can be improved by the commingled parts C, and the amount of matrix resin that is necessary in order to sufficiently bond the carbon fiber bundles A and the glass fiber bundles B can be reduced, therefore making it possible to reduce the resin content of the unidirectional-fiber-reinforced resin bodies, and also making it possible, even when some of the carbon fiber bundles A in the unidirectional fiber body are replaced with glass fiber bundles B, to set the weight equal to that in a case where all of the fibers in the unidirectional fiber body are carbon fiber bundles A.

Accordingly, the present embodiment provides an innovative sandwich panel which not only is lightweight but also can be produced inexpensively, which moreover has a fracture mode in which the sandwich panel fractures gradually near the fracture point rather than fracturing all at once, and furthermore in which it is possible to mitigate cracking that occurs in the direction of fibers in a unidirectional fiber body during machine processing.

## Claims

1. A sandwich panel in which a skin layer (2) is provided to upper and lower surfaces of a core (1), wherein the sandwich panel is **characterized in that**: the skin layer is obtained by layering unidirectional-fiber-reinforced resin bodies (3, 4) that comprise a matrix resin and a unidirectional fiber body in which carbon fiber bundles and glass fiber bundles are aligned in one direction, and woven-fiber-reinforced resin bodies (5, 6) that comprise a matrix resin and an interwoven fiber body in which glass fiber bundles are interwoven as warp bundles and weft bundles; and commingled parts in which the nap of the carbon fiber bundles and that of the glass fiber bundles commingle, or unitary parts where only the nap of the carbon fiber bundles is present, are provided along the length direction of each fiber bundle between adjacent carbon fiber bundles and glass fiber bundles in the unidirectional-fiber-reinforced resin bodies.

2. The sandwich panel according to claim 1, wherein the sandwich panel is **characterized in that** the length of each of the nap provided to the carbon fiber bundles and to the glass fiber bundles in the unidirectional-fiber-reinforced resin bodies is set to 1-5 mm.

3. The sandwich panel according to claim 1, wherein the sandwich panel is **characterized in that** the unidirectional fiber body is configured such that the carbon fiber bundles and the glass fiber bundles are alternatingly provided in alignment with each other.

4. The sandwich panel according to claim 1, wherein the sandwich panel is **characterized in that**: the skin layer is configured such that a first woven-fiber-reinforced resin body, a first unidirectional-fiber-reinforced resin body in which the fiber bundles are arrayed in a prescribed direction, a second woven-fiber-reinforced resin body, and a second unidirectional-fiber-reinforced resin body in which the fiber bundles are arrayed in a direction orthogonal to that of the fiber bundles in the first unidirectional-fiber-reinforced resin body are layered in the stated order from the core side; and the resin content of the fiber-reinforced resin bodies is set to at least 60% by weight in the first woven-fiber-reinforced resin body, at least 55% by weight in the second woven-fiber-reinforced resin body, and no more than 29% by weight in each of the first unidirectional-fiber-reinforced resin body and the second unidirectional-fiber-reinforced resin body.

5. The sandwich panel according to claim 4, wherein the sandwich panel is **characterized in that** a black woven-fiber-reinforced resin body that comprises a matrix resin and an interwoven fiber body in which glass fiber bundles are interwoven as warp bundles and weft bundles, has a resin content of at least 30% by weight, and contains at least 1% by weight of a black pigment in the matrix resin is provided to the outer side of the second unidirectional-fiber-reinforced resin body of the skin layer.

6. The sandwich panel according to claim 1, wherein the sandwich panel is **characterized in that**: the matrix resin used in the skin layer comprises a phenol resin or a mixture of a phenol resin and an epoxy resin; and the phenol resin is such that, in a heat release test, the peak value of the heat quantity at 5 minutes is 30 kW/m² or less, and the integral value of the heat quantity at 2 minutes is 25 kW/m² or less.

7. The sandwich panel according to claim 1, wherein the sandwich panel is **characterized in that** the core is a honeycomb core.

8. A method for manufacturing a unidirectional prepreg that comprises a matrix resin and a unidirectional fiber body in which carbon fiber bundles and glass fiber bundles are aligned in one direction, wherein the method for manufacturing a unidirectional prepreg is **characterized in that**: the side parts of both the carbon fiber bundles and the glass fiber bundles, or of only the carbon fiber bundles, are subjected to a nap-raising process; and the carbon fiber bundles and the glass fiber bundles are then aligned in one direction, heated, and semi-cured.

9. The method for manufacturing a unidirectional prepreg according to claim 8, wherein the method for manufacturing a unidirectional prepreg is **characterized in that** each of the carbon fiber bundles and the glass fiber bundles is continuously conveyed in a state of being alternatingly wound in a meandering manner about a plurality of contact bodies, and the nap-raising process is continuously carried out on both side parts of each of the carbon fiber bundles and the glass fiber bundles by the friction between the carbon fiber bundles and glass fiber bundles and the contact bodies.

10. A method for manufacturing a sandwich panel, said method being **characterized in that** the unidirectional-fiber-reinforced resin bodies in the sandwich panel according to claim 1 are formed by curing unidirectional prepregs manufactured using the method for manufacturing a unidirectional prepreg according to claim 8.

## Patentansprüche

1. Sandwichplatte, in der eine Hautschicht (2) an einer oberen und unteren Oberfläche eines Kerns (1) bereitgestellt ist, wobei die Sandwichplatte **dadurch gekennzeichnet ist, dass**: die Hautschicht erhalten wird, indem unidirektional faserverstärkte Harzkörper (3, 4), die ein Matrixharz und einen unidirektionalen Faserkörper, in dem Karbonfaserbündel und Glasfaserbündel in einer Richtung ausgerichtet sind, umfassen, und webfaserverstärkte Harzkörper (5, 6), die ein Matrixharz und einen verwobenen Faserkörper umfassen, indem Glasfaserbündel als Kettbündel und Schussbündel verwoben sind, geschichtet werden; und vermischte Teile, in denen der Flor der Karbonfaserbündel und jener der Glasfaserbündel sich vermischen, oder einheitliche Teile, wo nur der Flor der Kohlefaserbündel vorliegt, entlang der Längsrichtung jedes Faserbündels zwischen angrenzenden Karbonfaserbündeln und Glasfaserbündeln in den unidirektional faserverstärkten Harzkörpern bereitgestellt sind.

2. Sandwichplatte nach Anspruch 1, wobei die Sandwichplatte **dadurch gekennzeichnet ist, dass** die Länge jedes der für die Karbonfaserbündel und die Glasfaserbündel in den unidirektional faserverstärkten Harzkörpern bereitgestellten Flors, auf 1-5 mm festgelegt ist.

3. Sandwichplatte nach Anspruch 1, wobei die Sandwichplatte **dadurch gekennzeichnet ist, dass** der unidirektionale Faserkörper so konfiguriert ist, dass die Kohlenfaserbündel und die Glasfaserbündel abwechselnd in Ausrichtung miteinander bereitgestellt sind.

4. Sandwichplatte nach Anspruch 1, wobei die Sandwichplatte **dadurch gekennzeichnet ist, dass**: die Hautschicht so konfiguriert ist, dass ein erster webfaserverstärkter Harzkörper, ein erster unidirektional faserverstärkter Harzkörper, indem die Faserbündel in einer vorgeschriebenen Richtung angeordnet sind, ein zweiter webfaserverstärkter Harzkörper und ein zweiter unidirektional faserverstärkter Harzkörper, in dem die Faserbündel in einer Richtung orthogonal zu jener der Faserbündel in dem ersten unidirektional faserverstärkten Harzkörper angeordnet sind, in der genannten Reihenfolge von der Kernseite aus geschichtet sind; und der Harzgehalt der faserverstärkten Harzkörper in dem ersten webfaserverstärkten Harzkörper auf mindestens 60 Gew.-%, in dem zweiten webfaserverstärkten Harzkörper auf mindestens 55 Gew.-% und in sowohl dem ersten unidirektional faserverstärkten Harzkörper als auch dem zweiten unidirektional faserverstärkten Harzkörper auf nicht mehr als 29 Gew.-% festgelegt ist.

5. Sandwichplatte nach Anspruch 4, wobei die Sandwichplatte **dadurch gekennzeichnet ist, dass** ein schwarzer webfaserverstärkter Harzkörper, der ein Matrixharz und einen verwobenen Faserkörper, in dem die Glasfaserbündel als Kettbündel und Schussbündel verwoben sind, umfasst, einen Harzgehalt von mindestens 30% aufweist und mindestens 1 Gew.-% eines schwarzen Pigments in dem Matrixharz enthält, an der Außenseite des zweiten unidirektional faserverstärkten Harzkörpers der Hautschicht bereitgestellt ist.

6. Sandwichplatte nach Anspruch 1, wobei die Sandwichplatte **dadurch gekennzeichnet ist, dass**: das Matrixharz, das in der Hautschicht verwendet ist, ein Phenolharz oder ein Gemisch aus einem Phenolharz und einem Epoxyharz umfasst; und das Phenolharz so ist, dass in einem Wärmefreisetzungstest der Spitzenwert der Wärmemenge bei 5 Minuten 30 kW/m² oder weniger ist und der Integralwert der Wärmemenge bei 2 Minuten 25 kW/m² oder weniger ist.

7. Sandwichplatte nach Anspruch 1, wobei die Sandwichplatte **dadurch gekennzeichnet ist, dass** der Kern ein Wabenkern ist.

8. Verfahren zur Herstellung eines unidirektionalen Prepregs, das ein Matrixharz und einen unidirektionalen Faserkörper umfasst, in dem Karbonfaserbündel und Glasfaserbündel in einer Richtung ausgerichtet sind, wobei das Verfahren zur Herstellung eines unidirektionalen Prepregs **dadurch gekennzeichnet ist, dass**: die Seitenteile sowohl der Karbonfaserbündel als auch der Glasfaserbündel, oder nur der Karbonfaserbündel, einem Florhebeprozess unterzogen werden; und die Karbonfaserbündel und die Glasfaserbündel dann in einer Richtung ausgerichtet, erwärmt und semigehärtet werden.

9. Verfahren zur Herstellung eines unidirektionalen Prepregs nach Anspruch 8, wobei das Verfahren zur Herstellung eines unidirektionalen Prepregs **dadurch gekennzeichnet ist, dass** jedes der Karbonfaserbündel und der Glasfaserbündel fortlaufend in einem Zustand befördert wird, auf eine schlängelnde Weise abwechselnd um eine Vielzahl von Kontaktkörpern gewunden zu sein, und der Florhebeprozess fortlaufend an beiden Seitenteilen sowohl der Karbonfaserbündel als auch der Glasfaserbündel durch die Reibung zwischen den Karbonfaserbündeln und Glasfaserbündeln und den Kontaktkörpern umgesetzt wird.

10. Verfahren zur Herstellung einer Sandwichplatte, wobei das Verfahren **dadurch gekennzeichnet ist, dass** die unidirektional faserverstärkten Harzkörper in der Sandwichplatte nach Anspruch 1 gebildet sind, indem unidirektionale Prepregs gehärtet werden, die unter Verwendung des Verfahrens zur Herstellung eines unidirektionalen Prepregs nach Anspruch 8 hergestellt werden.

## Revendications

1. Panneau sandwich dans lequel une couche de revêtement (2) est prévue sur des surfaces supérieure et inférieure d'un noyau (1), dans lequel le panneau sandwich est **caractérisé en ce que** : la couche de revêtement est obtenue en superposant des corps de résine renforcés de fibres unidirectionnelles (3, 4) qui comprennent une résine matricielle et un corps de fibres unidirectionnelles dans lequel des faisceaux de fibres de carbone et des faisceaux de fibres de verre sont alignés dans une direction, et des corps de résine renforcés de fibres tissées (5, 6) qui comprennent une résine matricielle et un corps de fibres entrelacées dans lequel des faisceaux de fibres de verre sont entrelacés sous forme de faisceaux de chaînes et faisceaux de trames ; et des parties mélangées dans lesquelles le duvet des faisceaux de fibres de carbone et celui des faisceaux de fibres de verre se mélangent, ou des pièces unitaires où seul le duvet des faisceaux de fibres de carbone est présent, sont prévues dans la direction de la longueur de chaque faisceau de fibres entre des faisceaux de fibres de carbone et des faisceaux de fibres de verre adjacents dans les corps de résine renforcés de fibres unidirectionnelles.

2. Panneau sandwich selon la revendication 1, dans lequel le panneau sandwich est **caractérisé en ce que** la longueur de chacun des duvets fournis aux faisceaux de fibres de carbone et aux faisceaux de fibres de verre dans les corps de résine renforcés de fibres unidirectionnelles est fixée à 1 à 5 mm.

3. Panneau sandwich selon la revendication 1, dans lequel le panneau sandwich est **caractérisé en ce que** le corps de fibres unidirectionnelles est configuré de sorte que les faisceaux de fibres de carbone et les faisceaux de fibres de verre sont alternativement fournis selon un alignement les uns avec les autres.

4. Panneau sandwich selon la revendication 1, dans lequel le panneau sandwich est **caractérisé en ce que** : la couche de revêtement est configurée de sorte qu'un premier corps de résine renforcé de fibres tissées, un premier corps de résine renforcé de fibres unidirectionnelles dans lequel les faisceaux de fibres sont disposés dans une direction prescrite, un second corps de résine renforcé de fibres tissées, et un second corps de résine renforcé de fibres unidirectionnelles dans lequel les faisceaux de fibres sont disposés dans une direction orthogonale à celle des faisceaux de fibres dans le premier corps de résine renforcé de fibres unidirectionnelles sont superposés dans l'ordre indiqué depuis le côté noyau ; et la teneur en résine des corps de résine renforcés de fibres est fixée à au moins 60 % en poids dans le premier corps de résine renforcé de fibres tissées, au moins 55 % en poids dans le second corps de résine renforcé de fibres tissées, et pas plus de 29 % en poids dans chacun du premier corps de résine renforcé de fibres unidirectionnelles et du second corps de résine renforcé de fibres unidirectionnelles.

5. Panneau sandwich selon la revendication 4, dans lequel le panneau sandwich est **caractérisé en ce qu'**un corps de résine renforcé de fibres tissées noir qui comprend une résine matricielle et un corps de fibres entrelacées dans lequel des faisceaux de fibres de verre sont entrelacés sous forme de faisceaux de chaînes et de faisceaux de trames, présente une teneur en résine d'au moins 30 % en poids et contient au moins 1 % en poids d'un pigment noir dans la résine matricielle est fourni sur le côté extérieur du second corps de résine renforcé de fibres unidirectionnelles de la couche de revêtement.

6. Panneau sandwich selon la revendication 1, dans lequel le panneau sandwich est **caractérisé en ce que** : la résine matricielle utilisée dans la couche de revêtement comprend une résine phénolique ou un mélange d'une résine phénolique et d'une résine époxy ; et la résine phénolique est telle que, dans un test de dégagement de chaleur, la valeur maximale de la quantité de chaleur à 5 minutes est de 30 kW/m² ou moins, et la valeur intégrale de la quantité de chaleur à 2 minutes est de 25 kW/m² ou moins.

7. Panneau sandwich selon la revendication 1, dans lequel le panneau sandwich est **caractérisé en ce que** le noyau est un noyau en nid d'abeille.

8. Procédé de fabrication d'un préimprégné unidirectionnel qui comprend une résine matricielle et un corps de fibres unidirectionnelles dans lequel des faisceaux de fibres de carbone et des faisceaux de fibres de verre sont alignés dans une direction, dans lequel le procédé de fabrication d'un préimprégné unidirectionnel est **caractérisé en ce que** : les parties latérales à la fois des faisceaux de fibres de carbone et des faisceaux de fibres de verre, ou uniquement des faisceaux de fibres de carbone, sont soumises à un processus d'augmentation de duvet ; et les faisceaux de fibres de carbone et les faisceaux de fibres de verre sont ensuite alignés dans une direction, chauffés et semi-durcis.

9. Procédé de fabrication d'un préimprégné unidirectionnel selon la revendication 8, dans lequel le procédé de fabrication d'un préimprégné unidirectionnel est **caractérisé en ce que** chacun des faisceaux de fibres de carbone et des faisceaux de fibres de verre est transporté en continu dans un état consistant à être enroulé alternativement de façon sinueuse autour d'une pluralité de corps de contact, et le procédé d'augmentation de duvet est effectué en continu sur les deux parties latérales de chacun des faisceaux de fibres de carbone et des faisceaux de fibres de verre par le frottement entre les faisceaux de fibres de carbone et les faisceaux de fibres de verre et les corps de contact.

10. Procédé de fabrication d'un panneau sandwich, ledit procédé étant **caractérisé en ce que** les corps de résine renforcés de fibres unidirectionnelles dans le panneau sandwich selon la revendication 1 sont formés par durcissement de préimprégnés unidirectionnels fabriqués en utilisant le procédé de fabrication d'un préimprégné unidirectionnel selon la revendication 8.
